# EUROPÄISCHE PATENTSCHRIFT

(11) **EP 2 758 181 B1**
(45) Veröffentlichungstag und Bekanntmachung des Hinweises auf die Patenterteilung: **02.11.2016**
(21) Anmeldenummer: 12756372.4
(22) Anmeldetag: 05.09.2012
(51) Int. Cl.: B05B 12/08, B05B 13/04, B05B 15/04, B05D 1/02, B05B 5/04

(54) **BESCHICHTUNGSVERFAHREN UND BESCHICHTUNGSEINRICHTUNG MIT EINER KOMPENSATION VON UNSYMMETRIEN DES SPRÜHSTRAHLS**
COATING METHOD AND COATING SYSTEM WITH COMPENSATION OF THE UNSYMMETRICAL SPRAY JET
MÉTHODE ET DISPOSITIF DE REVÊTEMENT AVEC COMPENSATION DE L'ASYMÉTRIE DU JET DE PULVÉRISATION

(30) Priorität: 23.09.2011 DE 102011114382
(43) Veröffentlichungstag der Anmeldung: 30.07.2014
(73) Patentinhaber: Dürr Systems AG, 74321 Bietigheim-Bissingen (DE)
(72) Erfinder: FISCHER, Andreas, 71636 Ludwigsburg (DE); GLASER, Ralph, 75328 Schömberg (DE); GOLTZ, Carmen, 74369 Löchgau (DE)
(74) Vertreter: Beier, Ralph
(86) Internationale Anmeldenummer: PCT/EP2012/003729
(87) Internationale Veröffentlichungsnummer: WO 2013/041184

(56) Entgegenhaltungen:
- EP-A1- 0 695 582
- EP-A2- 2 468 463
- DE-A1- 19 608 754
- DE-A1- 19 847 258
- DE-T2- 60 304 914
- FR-A1- 2 894 599
- JP-A- 2003 019 451

## Beschreibung

Die Erfindung betrifft ein Beschichtungsverfahren zur Beschichtung einer Bauteiloberfläche eines Bauteils mit einem Beschichtungsmittel, insbesondere zur Lackierung eines Kraftfahrzeugkarosseriebauteils mit einem Lack. Weiterhin betrifft die Erfindung eine entsprechende Beschichtungseinrichtung.

In modernen Lackieranlagen zur Lackierung von Kraftfahrzeugkarosseriebauteilen werden als Applikationsgeräte in der Regel Rotationszerstäuber eingesetzt, die den zu applizierenden Lack in Tröpfchenform von einem schnell rotierenden Glockenteller abschleudern, so dass ein annähernd rotationssymmetrischer Sprühstrahl entsteht. Die Rotationszerstäuber können hierbei von mehrachsigen Lackierrobotern mit einer seriellen Kinematik geführt werden, was einen hohen Auftragswirkungsgrad ermöglicht.

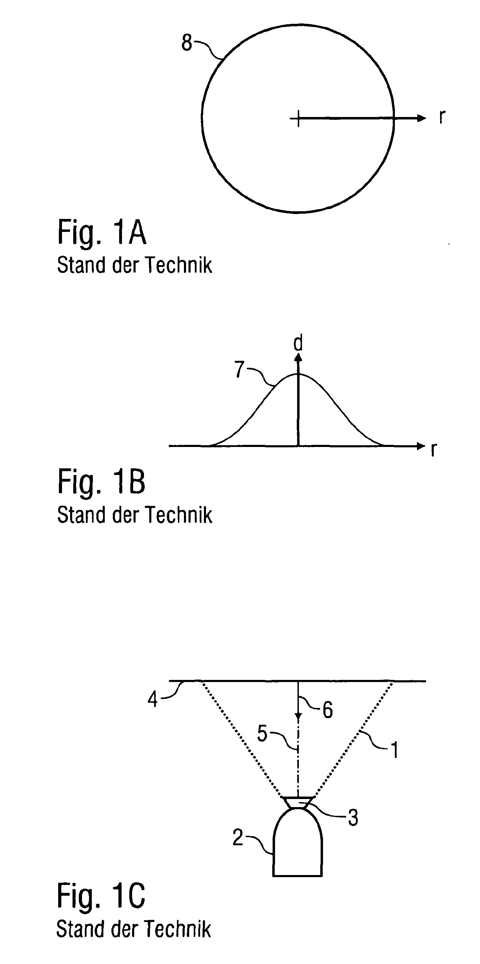

Beispielsweise zeigen die Figuren 1A bis 1C die herkömmliche Applikation eines idealisierten Sprühstrahls 1 durch einen Rotationszerstäuber 2 mit einem Glockenteller 3 auf eine Bauteiloberfläche 4 eines zu beschichtenden Bauteils, wobei es sich beispielsweise um ein Kraftfahrzeugkarosseriebauteil handeln kann. Aus Figur 1C ist ersichtlich, dass der Rotationszerstäuber 2 von dem Lackierroboter (nicht dargestellt) so über die Bauteiloberfläche 4 geführt wird, dass der Sprühstrahl 1 mit seiner Hauptachse 5 rechtwinklig zu der Bauteiloberfläche 5 und damit parallel zu einer Flächennormale 6 der Bauteiloberfläche 4 ausgerichtet ist. Bei einer Krümmung der Bauteiloberfläche 4 wird der Rotationszerstäuber 2 dann jeweils so ausgerichtet, dass der Sprühstrahl 1 mit der Hauptachse 5 parallel zu der Flächennormale 6 der Bauteiloberfläche 4 am Auftreffpunkt des Sprühstrahls 1 ausgerichtet ist. Bei dem idealisierten, exakt rotationssymmetrischen Sprühstrahl 1 ergibt sich dann ohne eine Bewegung des Rotationszerstäubers 2 eine entsprechend symmetrische Schichtdickenverteilung 7, wie sie in Figur 1B dargestellt ist. Die Symmetrie der Schichtdickenverteilung 7 ist vorteilhaft, wenn der Rotationszerstäuber 2 nacheinander mehrere seitlich nebeneinander liegende und seitlich überlappende Lackierbahnen auf die Bauteiloberfläche 4 aufbringt, da die Überlagerung der Schichtdickenverteilungen 7 der nebeneinander liegenden Lackierbahnen dann zu einer annähernd gleichmäßigen Schichtdicke führt. Figur 1A zeigt für den idealisierten rotationssymmetrischen Sprühstrahl 1 ein Spritzbild 8, das rotationssymmetrisch ist, wobei die Zeichnung eine Grenzlinie wiedergibt, innerhalb derer die Schichtdicke d einen vorgegebenen Grenzwert nicht unterschreitet.

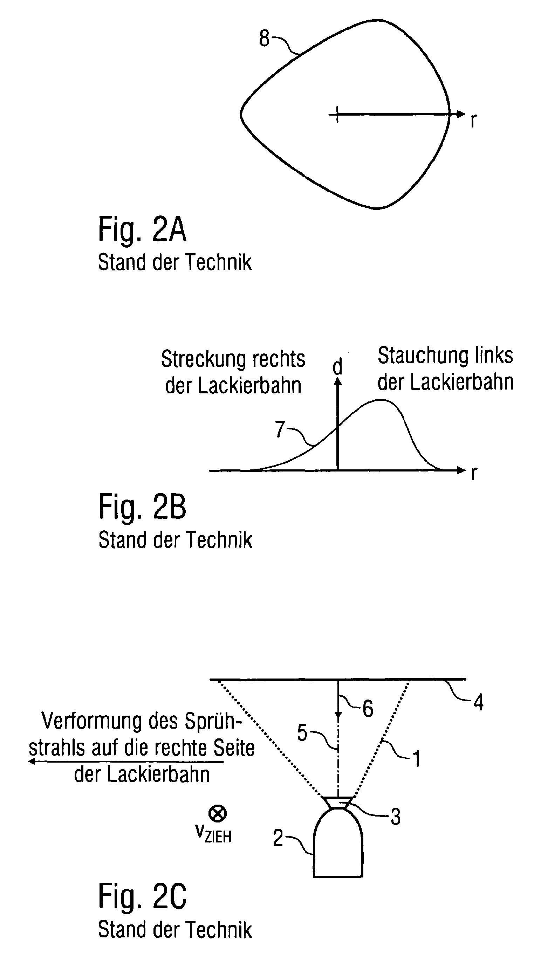

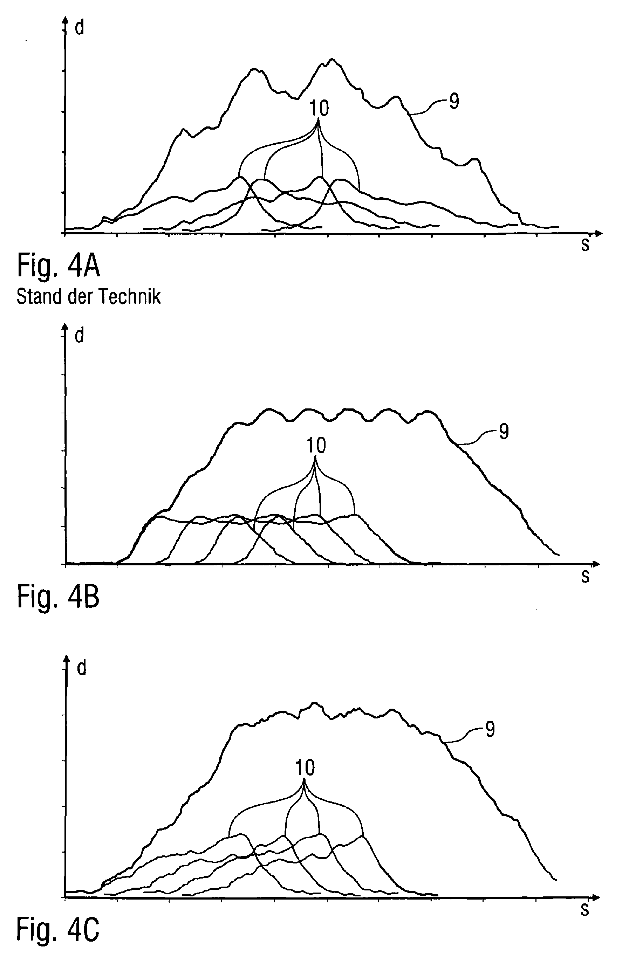

In der Praxis ist der Sprühstrahl 1 jedoch nicht exakt rotationssymmetrisch, sondern wird durch äußere Kräfte mehr oder weniger verformt, wie in den Figuren 2A bis 2C dargestellt ist. So wirken auf den Sprühstrahl 1 als Verformungskräfte beispielsweise die Gravitationskraft, eine elektrostatische Kraft aufgrund einer elektrostatischen Beschichtungsmittelaufladung sowie Strömungskräfte, die durch die Bewegung des Rotationszerstäubers 2 in der umgebenden Luft oder durch eine abwärts gerichtete Luftströmung in einer Lackierkabine erzeugt werden. In Figur 2C wird der Rotationszerstäuber 2 von dem Lackierroboter mit einer bestimmten Ziehgeschwindigkeit v_{ZIEH} in die Zeichenebene hinein bewegt, wobei sich der Glockenteller 3 von dem Rotationszerstäuber 2 aus betrachtet im Uhrzeigersinn dreht. Hierbei wird der Sprühstrahl 1 in Figur 2C aufgrund der störenden Strömungskräfte nach links (d.h. auf die rechte Seite der Lackierbahn) abgelenkt, so dass die Schichtdickenverteilung 7 auf der linken Seite in Figur 2B (d.h. auf der rechten Seite der Lackierbahn) in seitlicher Richtung über eine größere Fläche gestreckt wird, was auf der linken Seite in Figur 2B (d.h. auf der rechten Seite der Lackierbahn) zu einer geringeren Schichtdicke führt. Auf der rechten Seite in Figur 2B (d.h. auf der linken Seite der Lackierbahn) wird die Schichtdickenverteilung 7 dagegen in seitlicher Richtung auf eine kleinere Fläche gestaucht, was auf der rechten Seite zu einer entsprechend größeren Schichtdicke führt. Die dadurch erzeugte Unsymmetrie des Sprühstrahls 1 führt auf der Bauteiloberfläche 4 zu einer entsprechend unsymmetrischen Schichtdickenverteilung 7 und zu einem ebenfalls entsprechend unsymmetrischen Spritzbild 8, wie aus den Figuren 2A und 2B ersichtlich ist. Die resultierende Lackierbahn weist also auf der linken Seite eine erhöhte Schichtdicke und auf der rechten Seite eine verringerte Schichtdicke auf. Diese Unsymmetrien des Sprühstrahls 1 führen beim Aufbringen von mehreren nebeneinander liegenden und seitlich überlappenden Lackierbahnen zu einer relativ stark schwankenden Schichtdickenverteilung 9, wie aus Figur 4A ersichtlich ist, wobei sich die Schichtdickenverteilung 9 aus einer Überlagerung von Schichtdickenverteilungen 10 der einzelnen nebeneinander liegenden Lackierbahnen ergibt.

Die Figur 2C offenbart das Beschichtungsverfahren gemäß dem Oberbegriff des Anspruchs 1, bzw. die Beschichtungseinrichtung gemäß dem Oberbegriff des Anspruchs 9.

Die Unsymmetrien des Sprühstrahls 1 und die daraus resultierenden Probleme hinsichtlich der Ungleichmäßigkeit der Schichtdickenverteilung 9 wurden jedoch bisher noch nicht erkannt, so dass auch noch keine Lösungen dieses Problems bekannt sind.

Ferner ist zum Stand der Technik hinzuweisen auf EP 1 522 347 A1. Diese Druckschrift betrifft jedoch nicht das technische Gebiet der Lackiertechnik, sondern die Kühltechnik und ist deshalb fern liegend.

Schließlich ist zum Stand der Technik noch hinzuweisen auf FR 2 894 599 A1, DE 603 04 914 T2, DE 198 47 258 A1, DE 196 08 754 A1, JP 2003 019451 A, EP 695 582 A1 und EP 2 468 463 A2.

Auch diese Entgegenhaltungen offenbaren jedoch keine geeigneten Techniken zur Kompensation der Unsymmetrie des Sprühstrahls bei einem bahnorientierten Beschichtungsbetrieb, bei dem Lackierbahnen auf das zu beschichtende Bauteil aufgebracht werden.

Der Erfindung liegt deshalb die Aufgabe zugrunde, die bekannten Beschichtungsverfahren und Beschichtungseinrichtungen dahingehend zu verbessern, dass die Schichtdicke möglichst gleichmäßig ist.

Diese Aufgabe wird durch ein erfindungsgemäßes Beschichtungsverfahren bzw. durch eine erfindungsgemäße Beschichtungseinrichtung gemäß den Nebenansprüchen gelöst.

Die Erfindung beruht auf der technisch-physikalischen Erkenntnis, dass die störende Ungleichmäßigkeit der Schichtdickenverteilung von Unsymmetrien des Sprühstrahls des Zerstäubers herrührt. Die Erfindung umfasst deshalb die allgemeine technische Lehre, die Unsymmetrie des Sprühstrahls des Zerstäubers mindestens teilweise zu kompensieren, so dass die Unsymmetrie des resultierenden Spritzbildes auf der Bauteiloberfläche verringert wird.

Erfindungsgemäß wird die Unsymmetrie des Sprühstrahls dadurch kompensiert, dass der Sprühstrahl mit seiner Hauptachse gegenüber der Flächennormale der Bauteiloberfläche angewinkelt wird, so dass der Sprühstrahl mit seiner Hauptachse schräg auf die Bauteiloberfläche auftrifft. Dies lässt sich dadurch erreichen, dass der Zerstäuber mit seiner Sprühachse gegenüber der Flächennormale der Bauteiloberfläche angewinkelt wird, so dass sich auch ein entsprechend angewinkelter Sprühstrahl ergibt.

Erfindungsgemäß wird der Zerstäuber in einer bestimmten Lackierrichtung entlang der Bauteiloberfläche bewegt, um eine langgestreckte Lackierbahn entlang der Lackierrichtung auf die Bauteiloberfläche aufzubringen. Dabei wird der Sprühstrahl mit seiner Hauptachse quer zu der Lackierrichtung angewinkelt, um die Unsymmetrie des Sprühstrahls mindestens teilweise zu kompensieren. Die Anwinkelung des Sprühstrahls gegenüber der Flächennormale der Bauteiloberfläche erfolgt also vorzugsweise nicht in oder entgegen der Lackierrichtung, sondern quer zu der Lackierrichtung und zwar vorzugsweise rechtwinklig zu der Lackierrichtung.

Hierbei ist zu erwähnen, dass der Zerstäuber nicht exakt rechtwinklig zur Lackierrichtung angewinkelt werden muss, um die Unsymmetrien des Sprühstrahls zu kompensieren. Vielmehr besteht im Rahmen der Erfindung auch die Möglichkeiten von Zwischenwinkeln oder einer Anwinkelung in verschiedenen Kippebenen.

Weiterhin ist zu erwähnen, dass die Anwinkelungsrichtung von der Drehrichtung des Glockentellers und von der Lackierrichtung des Zerstäubers abhängt. Falls sich der Glockenteller - vom Rotationszerstäuber aus gesehen, d.h. von hinten betrachtet - im Uhrzeigsinn dreht, so wird der Zerstäuber vorzugsweise bezüglich der Lackierrichtung nach rechts angewinkelt. Falls sich der Glockenteller dagegen - vom Rotationszerstäuber aus gesehen, d.h. von hinten betrachtet - entgegen dem Uhrzeigsinn dreht, so wird der Zerstäuber vorzugsweise bezüglich der Lackierrichtung nach links angewinkelt.

Allgemein lässt sich sagen, dass der Sprühstrahl in der Praxis aufgrund der äußeren Kräfte (z.B. Gravitationskraft, Lenkluft, Kabinenluftströmung, elektrostatische Kraft, Luftströmung aufgrund der Bewegungsgeschwindigkeit des Zerstäubers) in eine bestimmte Verformungsrichtung quer zu der Hauptachse des Sprühstrahls verformt wird, so dass das resultierende Spritzbild auf der Bauteiloberfläche in der Verformungsrichtung gestreckt und entgegen der Verformungsrichtung gestaucht ist. Der Sprühstrahl wird deshalb vorzugsweise entgegen der Verformungsrichtung angewinkelt, um die Unsymmetrie des Sprühstrahls mindestens teilweise zu kompensieren.

Die Anwinkelung des Sprühstrahls gegenüber der Flächennormale der Bauteiloberfläche verringert also in dem resultierenden Spritzbild die Streckung und die Stauchung auf den gegenüberliegenden Seiten des Spritzbildes, was zu einer gleichmäßigeren Schichtdickenverteilung auf der Bauteiloberfläche führt.

In der Praxis werden nacheinander mehrere nebeneinander liegende und seitlich überlappende Lackierbahnen auf die Bauteiloberfläche aufgebracht, indem der Zerstäuber jeweils entlang den Lackierbahnen über die Bauteiloberfläche bewegt wird und dabei den Sprühstrahl auf die Bauteiloberfläche abgibt. Vorzugsweise wird der Zerstäuber mit dem unsymmetrischen Sprühstrahl beim Aufbringen der unmittelbar benachbarten Lackierbahnen in entgegengesetzten Lackierrichtung entlang den Lackierbahnen beweget, damit sich die Unsymmetrien des Sprühstrahls möglichst aufheben.

In einer Variante der Erfindung wird der Sprühstrahl hierbei in den beiden entgegengesetzten Lackierrichtung gegenüber der Flächennormale der Bauteiloberfläche angewinkelt, so dass sich die Streckungen und Stauchungen des Spritzbildes in den entgegengesetzten Lackierrichtungen mindestens teilweise aufheben.

In einer anderen Variante der Erfindung wird der Sprühstrahl dagegen nur bei einer Bewegung in einer der beiden entgegengesetzten Lackierrichtungen gegenüber der Flächennormale der Bauteiloberfläche angewinkelt. Bei der Bewegung in der entgegengesetzten Lackierrichtung wird der Sprühstrahl dagegen mit seiner Hauptachse im Wesentlichen parallel zu der Flächennormale der Bauteiloberfläche ausgerichtet, so dass die Streckungen oder Stauchungen des Spritzbildes in den entgegengesetzten Lackierrichtungen zumindest in der gleichen Richtung ausgerichtet sind, was ebenfalls zu einer gleichmäßigeren Schichtdickenverteilung führt.

Ein weiteres Ausführungsbeispiel der Erfindung sieht vor, dass nacheinander mindestens zwei übereinanderliegende Lackierbahnen auf die Bauteiloberfläche aufgebracht werden und zwar vorzugsweise Nass-in-Nass. Hierbei ist es vorteilhaft, wenn der Zerstäuber beim Aufbringen der ersten Lackierbahn in einer anderen Lackierrichtung bewegt wird als beim Aufbringen der zweiten Lackierbahn, so dass sich die Unsymmetrien des Spritzbildes in den beiden Lackierbahnen zumindest teilweise kompensieren, was zu einer gleichmäßigeren Schichtdickenverteilung führt.

Vorzugsweise wird der Zerstäuber beim Aufbringen dieser beiden übereinanderliegenden Lackierbahnen jeweils entlang einer mäanderförmigen Bewegungsbahn bewegt, was an sich aus dem Stand der Technik bekannt ist. In einer Variante der Erfindung ist die mäanderförmige Bewegungsbahn für die obere Lackierbahn gegenüber der mäanderförmigen Bewegungsbahn für die untere Lackierbahn gespiegelt, wobei die Spiegelachse vorzugsweise rechtwinklig zu den Lackierbahnen verläuft. Hierbei werden die Bewegungsbahnen der oberen und der unteren Lackierbahn von dem Zerstäuber vorzugsweise in entgegengesetzten Richtungen abgefahren. In einer anderen Variante der Erfindung sind die mäanderförmigen Bewegungsbahnen für die untere und die obere Lackierbahn dagegen im Wesentlichen gleich und werden nur in entgegengesetzten Lackierrichtungen abgefahren.

Praktische Versuche haben ergeben, dass es beim Auftragen von übereinander liegenden Lackierbahnen vorteilhaft ist, wenn die Lackierbahnen in entgegen gesetzten Lackierrichtungen aufgetragen werden, was zu einer gleichmäßigeren Schichtdickenverteilung führt.

Es wurde bereits eingangs kurz erwähnt, dass die Unsymmetrie des Sprühstrahls durch verschiedene Kräfte verursacht wird. Beispielsweise zählen hierzu folgende Kräfte:
- Eine abwärtsgerichtete Gravitationskraft,
- eine elektrostatische Kraft, die durch eine elektrostatische Beschichtungsmittelaufladung entsteht und zwischen dem elektrostatisch aufgeladenen Beschichtungsmittel und dem elektrisch geerdeten Bauteil oder umgekehrt wirkt,
- eine erste Strömungskraft, die durch einen Lenkluftstrahl verursacht wird, der zur Formung des Sprühstrahls von außen auf den Sprühstrahl abgegeben wird,
- eine zweite Strömungskraft, die dadurch verursacht wird, dass der Zerstäuber in der umgebenden Luft entlang der Bauteiloberfläche bewegt wird, und
- eine dritte Strömungskraft, die durch eine abwärtsgerichtete Luftströmung in einer Lackierkabine erzeugt wird.

Die vorstehend genannten Kräfte können im Betrieb des Zerstäubers schwanken, so dass auch die dadurch verursachte Unsymmetrie des Sprühstrahls im Betrieb Schwankungen unterliegen kann. Es ist deshalb vorteilhaft, wenn die Maßnahmen zur Kompensation der Unsymmetrie des Sprühstrahls im Betrieb entsprechend angepasst werden. Vorzugsweise werden deshalb im Betrieb des Zerstäubers diejenigen Kräfte ermittelt, welche die Unsymmetrie des Sprühstrahls verursachen. Die Anwinkelung des Zerstäubers gegenüber der Flächennormale der Bauteiloberfläche kann dann in Abhängigkeit von den ermittelten Kräften angepasst werden, um eine möglichst gleichmäßige Schichtdickenverteilung zu erreichen. Diese Anpassung kann im Rahmen einer Regelung (d.h. mit einer Rückkopplung) oder einer Steuerung (d.h. ohne eine Rückkopplung) erfolgen.

Weiterhin ist zu erwähnen, dass die Unsymmetrien des Sprühstrahls mit den Störgrößen (z.B. der Ziehgeschwindigkeit des Zerstäubers) zunehmen. Vorzugsweise ist die Anwinkelung des Zerstäubers deshalb im Betrieb nicht konstant, sondern wird hinsichtlich der Größe (Kippwinkel) und/oder der Richtung der Anwinkelung entsprechend angepasst, wobei die Zuordnung zwischen den Störgrößen und der zugehörigen optimalen Anwinkelung des Zerstäubers beispielsweise durch ein Kennlinienfeld erfolgen kann.

Ferner ist zu erwähnen, dass es sich bei dem Zerstäuber vorzugsweise um einen Rotationszerstäuber mit einem Glockenteller als Applikationselement handelt. Die Erfindung ist jedoch auch mit anderen Typen von Applikationsgeräten realisierbar, die einen Sprühstrahl des Beschichtungsmittels abgeben.

Weiterhin ist zu erwähnen, dass der Zerstäuber im Rahmen der Erfindung vorzugsweise durch einen mehrachsigen Lackierroboter mit einer seriellen oder parallelen Kinematik bewegt wird, was an sich aus dem Stand der Technik bekannt ist und deshalb nicht mehr beschrieben werden muss. Grundsätzlich eignet sich die Erfindung jedoch auch für einen Einsatz in Verbindung mit sogenannten Dachmaschinen oder Seitenmaschinen, sofern die Zerstäuber in der vorstehend beschriebenen Weise angewinkelt werden können, um die Unsymmetrien des Sprühstrahls zu kompensieren.

Schließlich ist zu erwähnen, dass die Erfindung auch eine entsprechende Beschichtungseinrichtung umfasst, wie sich bereits aus der vorliegenden Beschreibung ergibt, so dass auf eine separate Beschreibung der erfindungsgemäßen Beschichtungseinrichtung verzichtet werden kann.

Andere vorteilhafte Weiterbildungen der Erfindung sind in den Unteransprüchen gekennzeichnet oder werden nachstehen zusammen mit der Beschreibung der bevorzugten Ausführungsbeispiele der Erfindung anhand der Figuren näher erläutert. Es zeigen:
- Figur 1A: eine schematische Darstellung eines Spritzbildes eines Rotationszerstäubers mit einem idealisierten, exakt rotationssymmetrischen Sprühstrahl,
- Figur 1B: die Schichtdickenverteilung bei einem idealisierten, exakt rotationssymmetrischen Sprühstrahl,
- Figur 1C: eine schematische Darstellung eines Rotationszerstäubers mit einem idealisierten, exakt rotationssymmetrischen Sprühstrahl, der rechtwinklig auf eine Bauteiloberfläche gerichtet wird,
- Figur 2A: eine schematische Darstellung eines Spritzbildes eines Rotationszerstäubers mit einem realen, nicht exakt rotationssymmetrischen Sprühstrahl,
- Figur 2B: die Schichtdickenverteilung bei dem realen, nicht exakt rotationssymmetrischen Sprühstrahl,
- Figur 2C: den Rotationszerstäuber mit dem nicht rotationssymmetrischen Sprühstrahl, der rechtwinklig auf die Bauteiloberfläche gerichtet wird,
- Figur 3A: eine idealisierte Darstellung eines erfindungsgemäßen Spritzbildes, das auch bei einem deformierten, nicht rotationssymmetrischen Sprühstrahl entsteht, wenn die Unsymmetrie des Sprühstrahls erfindungsgemäß kompensiert wird,
- Figur 3B: die Schichtdickenverteilung, die aus der erfindungsgemäßen Kompensation von Unsymmetrien de Sprühstrahls resultiert,
- Figur 3C: einen Rotationszerstäuber, der erfindungsgemäß gegenüber der Flächennormale der Bauteiloberfläche angewinkelt ist, um Unsymmetrien des Sprühstrahls zu kompensieren,
- Figur 4A: eine Schichtdickenverteilung bei mehreren nebeneinander liegenden und seitlich überlappenden Lackierbahnen ohne eine Kompensation der Unsymmetrie des Sprühstrahls,
- Figur 4B: die Schichtdickenverteilung von mehreren nebeneinander liegenden und seitlich überlappenden Lackierbahnen, wenn der Zerstäuber auf jeder Lackierbahn angewinkelt wird, um die Unsymmetrien des Sprühstrahls zu kompensieren,
- Figur 4C: die Schichtdickenverteilung bei mehreren nebeneinander liegenden und seitlich überlappenden Lackierbahnen, wenn entweder nur die gestreckte oder nur die gestauchte Seite des Spritzbildes durch eine Anwinkelung des Zerstäubers kompensiert wird,
- Figur 5A: eine mäanderförmige Bewegungsbahn zum Aufbringen von mehreren nebeneinander liegenden und seitlich überlappenden Lackierbahnen sowie die entsprechende Anwinkelung des Zerstäubers auf den verschiednen Lackierbahnen,
- Figur 5B: die resultierende Schichtdickenverteilung auf den einzelnen Lackierbahnen,
- Figur 6A: eine mäanderförmige Bewegungsbahn des Zerstäubers für das Aufbringen mehrere nebeneinander liegender und seitlich überlappender Lackierbahnen und die zugehörige Anwinkelung des Zerstäubers auf den einzelnen Lackierbahnen,
- Figur 6B: die aus Figur 6A resultierenden Schichtdickenverteilung auf den einzelnen Lackierbahnen,
- Figur 7A: eine mäanderförmige Bewegungsbahn des Zerstäubers für das Aufbringen mehrere nebeneinanderliegender und seitlich überlappender Lackierbahnen sowie die zugehörige Anwinkelung des Zerstäubers auf den verschiedenen Lackierbahnen,
- Figur 7B: die resultierende Schichtdickenverteilung auf den einzelnen Lackierbahnen gemäß Figur 7A,
- Figur 8: eine mäanderförmige Bewegungsbahn eines Zerstäubers zum Aufbringen einer ersten Lackierbahn auf die Bauteiloberfläche,
- Figur 9A: eine mäanderförmige Bewegungsbahn des Zerstäubers zum Aufbringen einer zweiten Lackierbahn, wobei die beiden Lackierbahnen übereinander liegen und in derselben Lackierrichtung abgefahren werden,
- Figur 9B: die resultierende Schichtdickenverteilung der übereinander liegenden Lackierbahnen entlang der Linie s in Figur 9A,
- Figur 10A: eine gespiegelte Bewegungsbahn als alternative zu der Bewegungsbahn gemäß Figur 9A, wobei die übereinander liegenden Lackierbahnen in entgegen gesetzten Lackierrichtungen abgefahren werden,
- Figur 10B: die aus der Bewegungsbahn gemäß Figur 10A resultierende Schichtdickenverteilung entlang der Linie s in Figur 10A,
- Figur 11: eine stark vereinfachte schematische Darstellung einer erfindungsgemäßen Beschichtungseinrichtung, die Unsymmetrien des Sprühstrahls kompensiert.

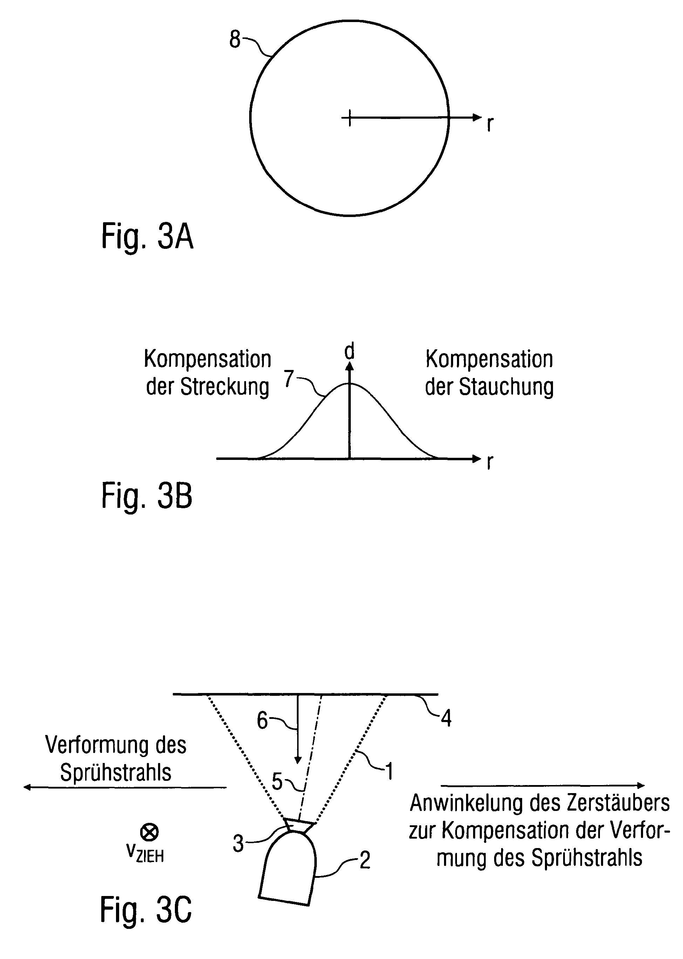

Im Folgenden wird zunächst unter Bezugnahme auf die Figuren 3A bis 3C das Grundprinzip der Erfindung erläutert. So zeigt Figur 3C den Rotationszerstäuber 2 mit dem bezüglich der Hauptachse 5 nach links verformten Sprühstrahl 1, wie er bereits in Figur 2C dargestellt war. Zur Vermeidung von Missverständnissen ist zu erwähnen, dass in den Figuren 3A-3C eine Verformung nach links bedeutet, dass der Sprühstrahl 1 bezüglich der Lackierbahn auf der Bauteiloberfläche nach rechts abgelenkt wird.

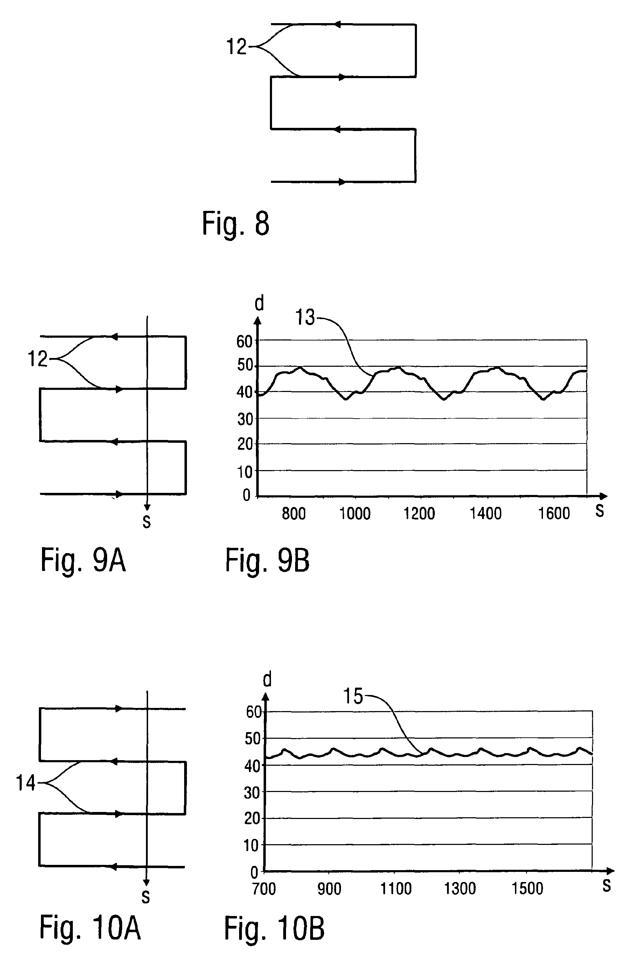

Die Erfindung sieht deshalb vor, dass der Rotationszerstäuber 2 mit der Hauptachse 5 entgegen der Verformungsrichtung des Sprühstrahls 1 gegenüber der Flächennormale 6 der Bauteiloberfläche 4 angewinkelt wird, so dass sich im Optimalfall die symmetrische Schichtdickenverteilung 7 gemäß Figur 3B und das ebenfalls symmetrische Spritzbild 3A gemäß Figur 8 ergibt. Der Rotationszerstäuber 2 wird also in der Zeichnung nach rechts angewinkelt, um die in der Zeichnung nach links gerichtete und von den störenden Kräften (z.B. Gravitationskraft, Strömungskräfte, etc.) verursachte Verformung des Sprühstrahls 1 zu kompensieren.

Der Rotationszerstäuber 2 wird hierbei von einem nicht dargestellten, mehrachsigen Lackierroboter geführt, der den Rotationszerstäuber 2 entsprechend anwinkelt. Hierbei ist zu betonen, dass sich in der Praxis weder das exakt rotationssymmetrische Spritzbild 8 gemäß Figur 3A noch die exakt rotationssymmetrische Schichtdickenverteilung 7 gemäß Figur 3B realisieren lässt. Die erfindungsgemäße Anwinkelung des Rotationszerstäubers 2 führt jedoch zu einer deutlichen Verringerung der Unsymmetrien des Spritzbildes 8 und der Schichtdickenverteilung 7.

Weiterhin ist zu erwähnen, dass der Winkel zwischen der Hauptachse 5 des Rotationszerstäubers 2 und der Flächennormale 6 der Bauteiloberfläche 4 im Betrieb laufend angepasst werden kann, um zu erreichen, dass das Spritzbild 8 und die Schichtdickenverteilung 7 möglichst symmetrisch sind. Während des laufenden Betriebs werden also laufend die Störgrößen gemessen, die den Sprühstrahl 1 verformen und deshalb zu den störenden Unsymmetrien des Sprühstrahls 1 beitragen. Zu diesen schwankenden Störgrößen zählen beispielsweise die Ziehgeschwindigkeit des Rotationszerstäubers 2 relativ zu der Bauteiloberfläche 4, die Luftsinkgeschwindigkeit in der Lackierkabine, die elektrische Spannung der elektrostatischen Beschichtungsmittelaufladung sowie die Lenkluftströmung. Aus diesen Störgrößen kann dann in Verbindung mit weiteren bekannten Daten (z.B. Position und Stellung des Lackierroboters, Eigenschaften des verwendeten Beschichtungsmittels, Drehzahl des Rotationszerstäubers, etc.) das Ausmaß und die Richtung der Verformung des Sprühstrahls 1 berechnet werden. Im Rahmen des erfindungsgemäßen Beschichtungsverfahren werden dann die Richtung und der Winkel der Anwinkelung des Rotationszerstäubers 2 relativ zu der Flächennormale 6 der Bauteiloberfläche 4 berechnet.

Diese Anpassung von Richtung und Winkel der Anwinkelung des Rotationszerstäubers 2 gegenüber der Flächennormale 6 der Bauteiloberfläche 4 kann im Rahmen der Erfindung gesteuert (d.h. ohne eine Rückkopplung) oder geregelt (d.h. mit einer Rückkopplung) werden.

Im Folgenden wird nun unter Bezugnahme auf die Figuren 4A und 4B ein bevorzugtes Ausführungsbeispiel der Erfindung beschrieben, bei dem der Rotationszerstäuber 2 mehrere nebeneinander liegende und seitlich überlappende Lackierbahnen auf die Bauteiloberfläche 4 aufbringt, was an sich aus dem Stand der Technik bekannt ist. Die einzelnen Lackierbahnen haben hierbei aufgrund der vorstehend beschriebenen störenden Verformung des Sprühstrahls 1 jeweils eine entsprechend unsymmetrische Schichtdickenverteilung 10, wie aus den Figuren 4B und 4C ersichtlich ist. Die Überlagerung der Schichtdickenverteilungen 10 der einzelnen Lackierbahnen führt dann zu der resultierenden Schichtdickenverteilung 9.

Bei dem Ausführungsbeispiel gemäß Figur 4B wird der Rotationszerstäuber 2 auf jeder der Lackierbahnen angewinkelt, um die Unsymmetrien des Sprühstrahls 1 zu kompensieren, d.h. in beiden Bewegungsrichtungen.

Bei dem Ausführungsbeispiel gemäß Figur 4C wird der Rotationszerstäuber 2 dagegen nur bei einer Bewegung in einer der entgegengesetzten Lackierrichtungen angewinkelt, um die Unsymmetrien des Sprühstrahls 1 zu kompensieren.

In beiden Fällen zeigt der Vergleich der resultierenden Schichtdickenverteilung 9 mit dem Stand der Technik gemäß 4A jedoch, dass die resultierende Schichtdickenverteilung 9 wesentlich gleichmäßiger ist als ohne eine Kompensation der Unsymmetrien des Sprühstrahls 1.

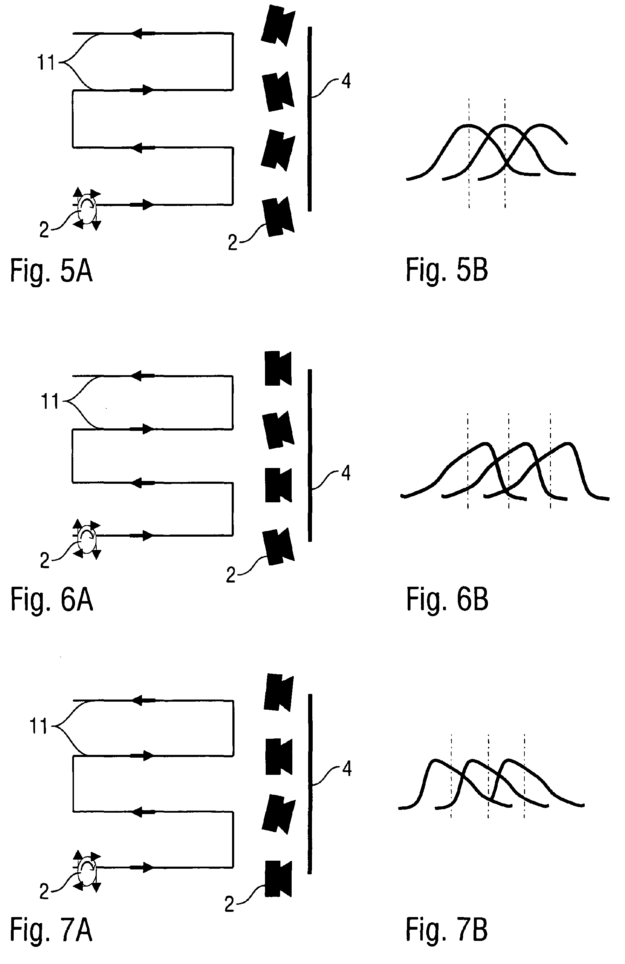

Die Figuren 5A, 6A und 7A zeigen eine mäanderförmige Bewegungsbahn 11 für den Rotationszerstäuber 2, wobei der Rotationszerstäuber 2 entlang der mäanderförmigen Bewegungsbahn 11 über die Bauteiloberfläche 4 geführt wird, um mehrere nebeneinanderliegende und seitlich überlappende Lackierbahnen aufzubringen. Die Figuren 5B, 6B und 7B zeigen die jeweilige resultierende Schichtdickenverteilung auf den einzelnen Lackierbahnen.

Bei der Variante gemäß den Figuren 5A und 5B wird der Rotationszerstäuber 2 auf jeder der Lackierbahnen angewinkelt, um die Unsymmetrien des Sprühstrahls 1 kompensieren.

Bei der Variante gemäß den Figuren 6A und 6B wird der Rotationszerstäuber 2 dagegen nur auf der Lackierbahn angewinkelt, die in der Zeichnung von links nach rechts verläuft. Bei einer Lackierrichtung von rechts nach links erfolgt dagegen in dieser Variante keine Anwinkelung des Rotationszerstäubers 2 zum Kompensieren von Unsymmetrien des Sprühstrahls 1.

Bei der Variante gemäß den Figuren 7A und 7B wird der Rotationszerstäuber 2 dagegen nur bei einer Lackierrichtung von rechts nach links angewinkelt, um Unsymmetrien des Sprühstrahls 1 zu kompensieren.

Die Figuren 8 bis 10B illustrieren ein weiteres Ausführungsbeispiel der Erfindung, bei dem nacheinander zwei übereinander liegende Lackierbahnen auf die Bauteiloberfläche 4 aufgebracht werden, wodurch sich eine mehrlagige Beschichtung ergibt.

Figur 8 zeigt hierbei einen ersten Beschichtungsmittelauftrag, wobei der Rotationszerstäuber 2 entlang einer mäanderförmigen Bewegungsbahn 12 über die Bauteiloberfläche 4 geführt wird, so dass der Sprühstrahl 1 auf der Bauteiloberfläche 4 mehrere nebeneinander liegende und seitlich überlappende Lackierbahnen erzeugt.

Figur 9A zeigt dann einen zweiten Beschichtungsmittelauftrag, der Nass-in-Nass auf den ersten Beschichtungsmittelauftrag aufgetragen wird, wobei der Rotationszerstäuber 2 dabei ebenfalls entlang der mäanderförmigen Bewegungsbahn 12 über die Bauteiloberfläche 4 geführt wird. In dieser Variante ist die Lackierrichtung bei dem ersten Beschichtungsmittelauftrag gemäß Figur 8 die gleiche wie bei dem zweiten Beschichtungsmittelauftrag gemäß Figur 9A.

Anschließend ergibt sich dann eine resultierende Schichtdickenverteilung 13, die in Figur 9B dargestellt ist, wobei die Zeichnung die Schichtdickenverteilung 13 entlang der Linie s in Figur 9A zeigt.

Die Figuren 10A und 10B zeigen eine Alternative für den zweiten Beschichtungsmittelauftrag, wie er vorstehend unter Bezugnahme auf die Figuren 9A und 9B beschrieben wurde. So wird der Rotationszerstäuber 2 während des zweiten Beschichtungsmittelauftrags entlang einer mäanderförmigen Bewegungsbahn 14 über die Bauteiloberfläche 4 geführt, woraus sich eine in Figur 10B dargestellte Schichtdickenverteilung 15 ergibt.

Der Unterschied zwischen den beiden vorstehend beschriebenen Ausführungsbeispielen gemäß den Figuren 9A und 9B einerseits und den Figuren 10A und 10B andererseits besteht zum Einen darin, dass die mäanderförmige Bewegungsbahn 14 für den zweiten Beschichtungsmittelauftrag gemäß Figur 10A gegenüber der mäanderförmigen Bewegungsbahn 12 für den ersten Beschichtungsmittelauftrag gespiegelt ist und zwar um eine Spiegelachse rechtwinklig zu den Lackierbahnen. Zum Anderen ist die Lackierrichtung bei dem zweiten Beschichtungsmittelauftrag gemäß Figur 10A entgegen gesetzt zu der Lackierrichtung bei dem ersten Beschichtungsmittelauftrag gemäß Figur 8.

Aus einem Vergleich der Figuren 9B und 10B ist ersichtlich, dass der zweite Beschichtungsmittelauftrag mit der gespiegelten Bewegungsbahn 14 und der entgegen gesetzten Lackierrichtung zu einer gleichmäßigeren Schichtdickenverteilung 15 führt und deshalb zu bevorzugen ist.

Eine ähnliche gute Schichtdickenverteilung ergibt sich jedoch auch bei einer nicht gespiegelten Bewegungsbahn für den zweiten Beschichtungsmittelauftrag, sofern die Lackierrichtung bei den beiden Beschichtungsmittelaufträgen entgegen gesetzt ist.

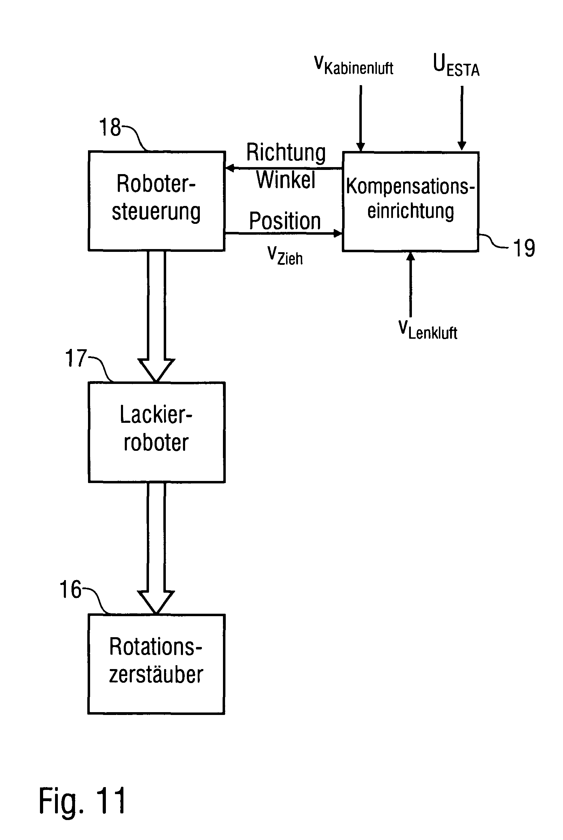

Figur 11 zeigt in stark schematisierter Form eine erfindungsgemäße Beschichtungseinrichtung, wie sie beispielsweise in einer Lackieranlage zur Lackierung von Kraftfahrzeugkarosseriebauteilen eingesetzt werden kann.

So weist die erfindungsgemäße Beschichtungseinrichtung in diesem Ausführungsbeispiel eine Rotationszerstäuber 16 auf, der von einem mehrachsigen Lackierroboter 17 mit einer seriellen Kinematik geführt wird, wobei sowohl der Rotationszerstäuber 16 als auch der Lackierroboter 17 grundsätzlich in herkömmlicher Weise ausgeführt sein können und deshalb nicht näher beschrieben werden müssen.

Darüber hinaus weist die erfindungsgemäße Beschichtungseinrichtung eine Robotersteuerung 18 auf, die zunächst die herkömmliche Aufgabe hat, den Rotationszerstäuber 16 entlang einer programmierten Bewegungsbahn über die Bauteiloberfläche zu führen.

Darüber hinaus weist die erfindungsgemäße Beschichtungseinrichtung eine Kompensationsrichtung 19 auf, welche die Aufgabe hat, die störenden Unsymmetrien des Sprühstrahls 1 des Rotationszerstäubers 16 zu kompensieren.

Hierzu erhält die Kompensationseinrichtung 19 als Eingangsgrößen verschiedene Störgrößen, wie beispielsweise die Bewegungsgeschwindigkeit v_{Zieh} des Rotationszerstäubers 16, eine variable Lenkluftgeschwindigkeit v_{Lenkluft}, eine variable Kabinenluft-Sinkgeschwindigkeit v_{Kabinenluft} und eine variable elektrostatische Aufladungsspannung U_{ESTA}. Ferner erhält die Kompensationseinrichtung 19 von der Robotersteuerung 18 Informationen über Position und Stellung des Lackierroboters 17.

Die Kompensationseinrichtung 19 berechnet daraus die Richtung und das Ausmaß der Verformung des von dem Rotationszerstäuber 16 abgegebenen Sprühstrahls 1. Darüber hinaus berechnet die Kompensationseinrichtung 19 dann, in welcher Richtung und mit welchem Winkel der Rotationszerstäuber 16 gegenüber der Flächennormale 6 der Bauteiloberfläche 4 angewinkelt werden muss, um die aus den Störgrößen resultierende Unsymmetrie des Sprühstrahls 1 zu kompensieren. Diese Daten werden dann von der Kompensationseinrichtung 19 an die Robotersteuerung 18 übertragen, die dann den Rotationszerstäuber 16 während des laufenden Betriebs stets entsprechend anwinkelt.

### Bezugszeichenliste

- d: Schichtdicke
- v_{ZIEH}: Bewegungsgeschwindigkeit des Rotationszerstäuber
- U_{ESTA}: Elektrostatische Aufladungsspannung
- v_{LENKLUFT}: Lenkluftgeschwindigkeit
- v_{KABINENLUFT}: Luftsinkgeschwindigkeit in der Lackierkabine
- 1: Sprühstrahl
- 2: Rotationszerstäuber
- 3: Glockenteller
- 4: Bauteiloberfläche
- 5: Hauptachse des Sprühstrahls
- 6: Flächennormale der Bauteiloberfläche
- 7: Schichtdickenverteilung
- 8: Spritzbild
- 9: Schichtdickenverteilung
- 10: Schichtdickenverteilung der einzelnen Lackierbahnen
- 11: Mäanderförmige Bewegungsbahn
- 12: Mäanderförmige Bewegungsbahn
- 13: Schichtdickenverteilung
- 14: Mäanderförmige Bewegungsbahn
- 15: Schichtdickenverteilung
- 16: Rotationszerstäuber
- 17: Lackierroboter
- 18: Robotersteuerung
- 19: Kompensationseinrichtung

## Patentansprüche

1. Beschichtungsverfahren zur Beschichtung einer Bauteiloberfläche (4) eines Bauteils mit einem Beschichtungsmittel, insbesondere zur Lackierung eines Kraftfahrzeugkarosseriebauteils mit einem Lack, mit den folgenden Schritten:
a) Abgabe eines Sprühstrahls (1) des Beschichtungsmittels mittels eines Zerstäubers (2) auf die Bauteiloberfläche (4) des zu beschichtenden Bauteils,
a1) wobei der Sprühstrahl (1) eine Hauptachse (5) hat und bezüglich der Hauptachse (5) eine Unsymmetrie aufweist, so dass der Sprühstrahl (1) auf der Bauteiloberfläche (4) ein Spritzbild (8) mit einer entsprechenden Unsymmetrie erzeugt, und
a2) wobei der Zerstäuber (2) in einer bestimmten Lackierrichtung entlang der Bauteiloberfläche (4) bewegt wird, um eine langgestreckte Lackierbahn entlang der Lackierrichtung auf die Bauteiloberfläche (4) aufzubringen,
**gekennzeichnet durch** folgenden Schritt:
b) Mindestens teilweise Kompensation der Unsymmetrie des Sprühstrahls (1), so dass die Unsymmetrie des resultierenden Spritzbildes (8) auf der Bauteiloberfläche (4) verringert wird,
c) wobei der Sprühstrahl (1) mit seiner Hauptachse (5) quer, insbesondere rechtwinklig, zu der Lackierrichtung angewinkelt wird, um die Unsymmetrie des Sprühstrahls (1) mindestens teilweise zu kompensieren.

2. Beschichtungsverfahren nach Anspruch 1, **dadurch gekennzeichnet,**
a) **dass** der Sprühstrahl (1) in eine Verformungsrichtung quer zu der Hauptachse (5) des Sprühstrahls (1) verformt ist, so dass das resultierende Spritzbild (8) auf der Bauteiloberfläche (4) in der Verformungsrichtung gestreckt und entgegen der Verformungsrichtung gestaucht ist,
b) **dass** der Sprühstrahl (1) entgegen der Verformungsrichtung angewinkelt wird, um die Unsymmetrie des Sprühstrahls (1) mindestens teilweise zu kompensieren.

3. Beschichtungsverfahren nach einem der vorhergehenden Ansprüche, **dadurch gekennzeichnet,**
a) **dass** nacheinander mehrere nebeneinander liegende und seitlich überlappende Lackierbahnen auf die Bauteiloberfläche (4) aufgebracht werden, indem der Zerstäuber (2) jeweils entlang den Lackierbahnen über die Bauteiloberfläche (4) bewegt wird und dabei den Sprühstrahl (1) auf die Bauteiloberfläche (4) abgibt, und
b) **dass** der Zerstäuber (2) beim Aufbringen der unmittelbar benachbarten Lackierbahnen in entgegen gesetzten Lackierrichtungen entlang den Lackierbahnen bewegt wird.

4. Beschichtungsverfahren nach Anspruch 3, **dadurch gekennzeichnet,**
a) **dass** der Sprühstrahl (1) mit seiner Hauptachse (5) in den beiden entgegen gesetzten Lackierrichtungen quer zu der Lackierbahn gegenüber der Flächennormale (6) der Bauteiloberfläche (4) angewinkelt wird, so dass sich die Streckungen und Stauchungen des Spritzbildes (8) in den entgegen gesetzten Lackierrichtungen mindestens teilweise aufheben, oder
b) **dass** der Sprühstrahl (1) mit seiner Hauptachse (5) nur in einer Lackierrichtung quer zu der Lackierbahn gegenüber der Flächennormale (6) der Bauteiloberfläche (4) angewinkelt wird und in der entgegen gesetzten Lackierrichtung mit seiner Hauptachse (5) im Wesentlichen parallel zur Flächennormale (6) der Bauteiloberfläche (4) ausgerichtet wird, so dass die Streckungen oder Stauchungen des Spritzbildes (8) in den entgegen gesetzten Lackierrichtungen in der gleichen Richtung ausgerichtet sind.

5. Beschichtungsverfahren nach einem der vorhergehenden Ansprüche, **dadurch gekennzeichnet,**
a) **dass** eine erste Lackierbahn auf die Bauteiloberfläche (4) aufgebracht wird, indem der Zerstäuber (2) entlang der ersten Lackierbahn über die Bauteiloberfläche (4) bewegt wird und dabei den Sprühstrahl (1) auf die Bauteiloberfläche (4) abgibt,
b) **dass** eine zweite Lackierbahn auf die Bauteiloberfläche (4) aufgebracht wird, indem der Zerstäuber (2) entlang der zweiten Lackierbahn über die Bauteiloberfläche (4) bewegt wird und dabei den Sprühstrahl (1) auf die Bauteiloberfläche (4) abgibt, wobei die zweite Lackierbahn auf die erste Lackierbahn aufgebracht wird,
c) **dass** der Zerstäuber (2) beim Aufbringen der ersten Lackierbahn und beim Aufbringen der zweiten Lackierbahn in entgegen gesetzten Richtungen bewegt wird, so dass sich die Unsymmetrien des Spritzbildes (8) in den beiden Lackierbahnen zumindest teilweise kompensieren.

6. Beschichtungsverfahren nach Anspruch 5, **dadurch gekennzeichnet,**
a) **dass** der Zerstäuber (2) beim Aufbringen der beiden Lackierbahnen jeweils entlang einer mäanderförmigen Bewegungsbahn (12, 14) bewegt wird, wobei die mäanderförmigen Bewegungsbahnen (12, 14) der beiden Lackierbahnen zueinander gespiegelt sind und von dem Zerstäuber (2) in unterschiedlichen Lackierrichtungen abgefahren werden, oder
b) **dass** der Zerstäuber (2) beim Aufbringen der beiden Lackierbahnen jeweils entlang einer mäanderförmigen Bewegungsbahn (12) bewegt wird, wobei die mäanderförmigen Bewegungsbahnen (12) der beiden Lackierbahnen im Wesentlichen übereinstimmen, aber in entgegen gesetzten Lackierrichtungen abgefahren werden.

7. Beschichtungsverfahren nach einem der vorhergehenden Ansprüche, **dadurch gekennzeichnet, dass** die Unsymmetrie des Sprühstrahls (1) durch mindestens eine der folgenden Kräfte verursacht wird, die auf den Sprühstrahl (1) wirken:
a) eine abwärts gerichtete Gravitationskraft,
b) einer elektrostatische Kraft, die durch eine elektrostatische Beschichtungsmittelaufladung entsteht und zwischen dem elektrostatisch aufgeladenen Beschichtungsmittel und dem elektrisch geerdeten Bauteil wirkt,
c) eine erste Strömungskraft, die durch einen Lenkluftstrahl verursacht wird, und/oder
d) eine zweite Strömungskraft, die dadurch verursacht wird, dass der Zerstäuber (2) in der umgebenden Luft entlang der Bauteiloberfläche (4) bewegt wird, und/oder
e) eine dritte Strömungskraft, die durch eine abwärts gerichtete Luftströmung in einer Lackierkabine erzeugt wird.

8. Beschichtungsverfahren nach Anspruch 7, **gekennzeichnet durch** folgende Schritte zur Kompensation der Unsymmetrie des Sprühstrahls (1):
a) Ermitteln mindestens einer der Kräfte, welche die Unsymmetrie des Sprühstrahls (1) verursachen,
b) Anwinkeln des Zerstäubers (2) gegenüber der Flächennormale (6) der Bauteiloberfläche (4) in Abhängigkeit von der oder den ermittelten Kräften.

9. Beschichtungseinrichtung zur Beschichtung einer Bauteiloberfläche (4) eines Bauteils mit einem Beschichtungsmittel, insbesondere zur Lackierung eines Kraftfahrzeugkarosseriebauteils mit einem Lack, mit
a) einem Zerstäuber (2) zur Abgabe eines Sprühstrahls (1) eines Beschichtungsmittels auf die Bauteiloberfläche (4), wobei der Sprühstrahl (1) eine Hauptachse (5) hat und bezüglich der Hauptachse (5) eine Unsymmetrie aufweist, so dass der Sprühstrahl (1) auf der Bauteiloberfläche (4) ein Spritzbild (8) mit einer entsprechenden Unsymmetrie erzeugt,
b) einem Manipulator (17) zum Bewegen des Zerstäubers (2),
c) einer Steuereinheit (18) zum Ansteuern des Manipulators (17),
d) wobei die Steuereinheit (18) den Manipulator (17) so ansteuert, dass der Zerstäuber (2) in einer bestimmten Lackierrichtung entlang der Bauteiloberfläche (4) bewegt wird, um eine langgestreckte Lackierbahn entlang der Lackierrichtung auf die Bauteiloberfläche (4) aufzubringen,
**gekennzeichnet durch**
e) eine Kompensationseinrichtung, welche die Unsymmetrie des Sprühstrahls (1) mindestens teilweise kompensiert, so dass die Unsymmetrie des resultierenden Spritzbildes (8) auf der Bauteiloberfläche (4) verringert wird,
f) wobei die Steuereinheit (18) den Manipulator (17) so ansteuert, dass der Sprühstrahl (1) mit seiner Hauptachse (5) quer, insbesondere rechtwinklig, zu der Lackierrichtung angewinkelt wird, um die Unsymmetrie des Sprühstrahls (1) mindestens teilweise zu kompensieren.

10. Beschichtungseinrichtung nach Anspruch 9, **dadurch gekennzeichnet,**
a) **dass** der Sprühstrahl (1) in eine Verformungsrichtung quer zu der Hauptachse (5) des Sprühstrahls (1) verformt ist, so dass das resultierende Spritzbild (8) auf der Bauteiloberfläche (4) in der Verformungsrichtung gestreckt und entgegen der Verformungsrichtung gestaucht ist,
b) **dass** die Steuereinheit (18) den Manipulator (17) so ansteuert, dass der Zerstäuber (2) entgegen der Verformungsrichtung angewinkelt wird, um die Unsymmetrie des Sprühstrahls (1) mindestens teilweise zu kompensieren.

11. Beschichtungseinrichtung nach einem der Ansprüche 9 bis 10, **dadurch gekennzeichnet,**
a) **dass** die Steuereinheit (18) den Manipulator (17) so ansteuert, dass nacheinander mehrere nebeneinander liegende und seitlich überlappende Lackierbahnen auf die Bauteiloberfläche (4) aufgebracht werden, indem der Zerstäuber (2) jeweils entlang den Lackierbahnen über die Bauteiloberfläche (4) bewegt wird und dabei den Sprühstrahl (1) auf die Bauteiloberfläche (4) abgibt, und
b) **dass** die Steuereinheit (18) den Manipulator (17) so ansteuert, dass der Zerstäuber (2) beim Aufbringen der unmittelbar benachbarten Lackierbahnen in entgegen gesetzten Lackierrichtungen entlang den Lackierbahnen bewegt wird.

12. Beschichtungseinrichtung nach Anspruch 11, **dadurch gekennzeichnet,**
a) **dass** die Steuereinheit (18) den Manipulator (17) so ansteuert, dass der Zerstäuber (2) in den beiden entgegen gesetzten Lackierrichtungen quer zu der Lackierbahn gegenüber der Flächennormale (6) der Bauteiloberfläche (4) angewinkelt wird, so dass sich die Streckungen und Stauchungen des Spritzbildes (8) in den entgegen gesetzten Lackierrichtungen mindestens teilweise aufheben, oder
b) **dass** die Steuereinheit (18) den Manipulator (17) so ansteuert, dass der Zerstäuber (2) nur in einer Lackierrichtung quer zu der Lackierbahn gegenüber der Flächennormale (6) der Bauteiloberfläche (4) angewinkelt wird und in der entgegen gesetzten Lackierrichtung im Wesentlichen parallel zur Flächennormale (6) der Bauteiloberfläche (4) ausgerichtet wird, so dass die Streckungen oder Stauchungen des Spritzbildes (8) in den entgegen gesetzten Lackierrichtungen in der gleichen Richtung ausgerichtet sind.

13. Beschichtungseinrichtung nach einem der Ansprüche 9 bis 12, **dadurch gekennzeichnet,**
a) **dass** der Manipulator (17) ein mehrachsiger Lackierroboter (17) ist, insbesondere ein frei programmierbarer Lackierroboter (17) mit einer seriellen Kinematik, oder
b) **dass** der Manipulator eine Lackiermaschine ist, insbesondere eine Dachmaschine oder eine Seitenmaschine.

## Claims

1. A coating method for coating a component surface (4) of a component with a coating agent, in particular for painting a motor vehicle body part with a paint, with the following steps:
a) Dispensing a spray jet (1) of the coating agent by means of an atomizer (2) onto the component surface (4) of the component to be coated,
a1) wherein the spray jet (1) has a main axis (5) and an asymmetry with respect to the main axis (5), so that the spray jet (1) on the component surface (4) generates a spray pattern (8) with a corresponding asymmetry, and
a2) wherein the atomizer (2) is moved in a certain painting direction along the component surface (4) in order to apply an elongated painting path along the painting direction onto the component surface (4),
**characterized by** the following step:
b) At least partially compensating for the asymmetry of the spray jet (1), so that the asymmetry of the resulting spray pattern (8) on the component surface (4) is reduced,
c) wherein the spray jet (1) is angled with its main axis (5) transverse, in particular at right angle to the painting direction in order to at least partially compensate for the asymmetry of the spray jet (1).

2. The coating method according to claim 1,
**characterized in that**
a) the spray jet (1) is deformed in a deformation direction transversely with respect to the main axis (5) of the spray jet (1), so that the resulting spray pattern (8) on the component surface (4) is stretched in the deformation direction and compressed against the deformation direction,
b) the spray jet (1) is angled against the deformation direction in order to at least partially compensate for the asymmetry of the spray jet (1).

3. The coating method according to any one of the preceding claims, **characterized in that**
a) several painting paths lying side by side and overlapping sidewards are applied onto the component surface (4) in such a way that the atomizer (2) is moved respectively along the painting path over the component surface (4) and delivers in this process the spray jet (1) onto the component surface (4), and
b) the atomizer (2) is moved during application of the directly neighboring painting paths in opposite painting directions along the painting paths.

4. The coating method according to claim 3,
**characterized in that**
a) the spray jet (1) is angled with its main axis (5) in both opposite painting directions transversely with respect to the painting path opposite the surface normal (6) of the component surface (4), so that the stretchings and compressions of the spray pattern (8) in the opposite painting directions at least partially compensate for each other, or
b) the spray jet (1) is angled with its main axis (5) only in one painting direction transversely with respect to the painting path opposite the surface normal (6) of the component surface (4) and oriented in the opposite painting direction with its main axis (5) essentially parallel to the surface normal (6) of the component surface (4), so that the stretchings or compressions of the spray pattern (8) in the opposite painting directions are oriented in the same direction.

5. The coating method according to any one of the preceding claims, **characterized in that**
a) a first painting path is applied onto the component surface (4) in such a way that the atomizer (2) is moved along the first painting path over the component surface (4) and delivers in this process the spray jet (1) onto the component surface (4),
b) a second painting path is applied onto the component surface (4) in such a way that the atomizer (2) is moved along the second painting path over the component surface (4) and delivers in this process the spray jet (1) onto the component surface (4), wherein the second painting path is applied onto the first painting path,
c) the atomizer (2) is moved in opposite directions during application of the first painting path and during application of the second painting path, so that the asymmetries of the spray pattern (8) in both painting paths at least partially compensate for each other.

6. The coating method according to claim 5,
**characterized in that**
a) the atomizer (2) is moved during application of both painting paths, respectively, along a meandrous movement path (12, 14), wherein the meandrous movement paths (12, 14) of both painting paths are mirrored with respect to one another and are traversed by the atomizer (2) in opposite painting directions, or
b) the atomizer (2) is moved during application of both painting paths, respectively, along a meandrous movement path (12, 14), wherein the meandrous movement paths (12, 12) of both painting paths are essentially corresponding but are traversed in opposite painting directions.

7. The coating method according to any one of the preceding claims, **characterized in that** the asymmetry of the spray jet (1) is caused by at least one of the following forces, which act on the spray jet (1):
a) a downward oriented gravitational force,
b) an electrostatic force, which results from an electrostatic coating agent charging and acts between the electrostatically charged coating agent and the electrically grounded component,
c) a first flow force, which is caused by a guide air jet, and/or
d) a second flow force, which is caused by the fact that the atomizer (2) is moved in the surrounding air along the component surface (4), and/or
e) a third flow force, which is generated by an air flow oriented downwards in a paint cabin.

8. The coating method according to claim 7, **characterized by the** following steps to compensate for the asymmetry of the spray jet (1):
a) Determining at least one of the forces, which cause the asymmetry of the spray jet (1),
b) Angulation of the atomizer (2) with respect to the surface normal (6) of the component surface (4) depending on the determined force(s).

9. A coating device for coating a component surface (4) of a component with a coating agent, in particular for painting a motor vehicle body part with a paint, with
a) an atomizer (2) for dispensing a spray jet (1) of a coating agent onto the component surface (4), wherein the spray jet (1) has a main axis (5) and an asymmetry with respect to the main axis (5), so that the spray jet (1) on the component surface (4) generates a spray pattern (8) with a corresponding asymmetry,
b) a manipulator (17) to move the atomizer (2),
c) a control unit (18) to control the manipulator (17),
d) wherein the control unit (18) controls the manipulator (17) in such a manner that the atomizer (2) is moved in a certain painting direction along the component surface (4) in order to apply an elongated painting path along the painting direction onto the component surface (4),
**characterized by**
e) a compensation device, which at least partially compensates for the asymmetry of the spray jet (1), so that the asymmetry of the resulting spray pattern (8) on the component surface (4) is reduced,
f) wherein the control unit (18) controls the manipulator (17) in such a manner that the spray jet (1) is angled with its main axis (5) transverse, in particular at right angle to the painting direction in order to at least partially compensate for the asymmetry of the spray jet (1).

10. The coating device according to claim 9,
**characterized in that**
a) the spray jet (1) is deformed in a deformation direction transversely with respect to the main axis (5) of the spray jet (1), so that the resulting spray pattern (8) on the component surface (4) is stretched in the deformation direction and compressed against the deformation direction,
b) the control unit (18) controls the manipulator (17) in such a manner that the atomizer (2) is angled against the deformation direction in order to at least partially compensate for the asymmetry of the spray jet (1).

11. The coating device according to any one of the claims 9 to 10, **characterized in that**
a) the control unit (18) controls the manipulator (17) in such a manner that several painting paths lying side by side and overlapping sidewards are applied onto the component surface (4) in such a way that the atomizer (2) is moved respectively along the painting path over the component surface (4) and delivers in this process the spray jet (1) onto the component surface (4), and
b) the control unit (18) controls the manipulator (17) in such a manner that the atomizer (2) is moved during application of the directly neighboring painting paths in opposite painting directions along the painting paths.

12. The coating device according to claim 11,
**characterized in that**
a) the control unit (18) controls the manipulator (17) in such a manner that the atomizer (2) is angled in both opposite painting directions transversely with respect to the painting path opposite the surface normal (6) of the component surface (4), so that the stretchings and compressions of the spray pattern (8) in the opposite painting directions at least partially compensate for each other, or
b) the control unit (18) controls the manipulator (17) in such a manner that the atomizer (2) is angled only in one painting direction transversely with respect to the painting path opposite the surface normal (6) of the component surface (4) and oriented in the opposite painting direction with its main axis (5) essentially parallel to the surface normal (6) of the component surface (4), so that the stretchings or compressions of the spray pattern (8) in the opposite painting directions are oriented in the same direction.

13. The coating device according to any one of the claims 9 to 12, **characterized in that**
a) the manipulator (17) is a multi-axis painting robot (17), in particular a free programmable painting robot (17) with a serial kinematics, or
b) the manipulator is a painting machine, in particular a rooftop machine or a side machine.

## Revendications

1. Procédé de revêtement pour le revêtement de la surface (4) d'un composant avec un produit de revêtement, plus particulièrement pour la peinture d'un composant de carrosserie de véhicule avec une peinture, comprenant les étapes suivantes :
a) distribution d'un jet de pulvérisation (1) de produit de revêtement à l'aide d'un pulvérisateur (2) sur la surface (4) du composant à revêtir,
a1) le jet de pulvérisation (1) présentant un axe principal (5) et présentant une asymétrie par rapport à l'axe principal (5), de façon à ce que le jet de pulvérisation (1) produise, sur la surface du composant (4), une image de pulvérisation (8) avec une asymétrie correspondante, et
a2) le pulvérisateur (2) est déplacé dans une direction de de peinture déterminée le long de la surface du composant (4) afin d'appliquer une bande de peinture allongée le long de la direction de peinture sur la surface du composant (4),
**caractérisé par** l'étape suivante :
b) compensation au moins partielle de l'asymétrie du jet de pulvérisation (1), de façon à ce que l'asymétrie de l'image de pulvérisation (8) qui en résulte sur la surface du composant (4) soit réduite,
c) le jet de pulvérisation (1) étant, avec son axe principal (5), transversale, plus particulièrement perpendiculaire, à la direction de peinture, afin de compenser au moins partiellement l'asymétrie du jet de pulvérisation (1).

2. Procédé de revêtement selon la revendication 1, **caractérisé en ce que**
a) le jet de pulvérisation (1) est déformé avec une direction de déformation transversal par rapport à l'axe principal (5) du jet de pulvérisation (1), de façon à ce que l'image de pulvérisation (8) qui en résulte sur la surface du composant (4) soit étirée dans la direction de déformation et refoulée dans la direction inverse de la déformation,
b) le jet de pulvérisation (1) est incliné dans la direction inverse de la déformation afin de compenser au moins partiellement l'asymétrie du jet de pulvérisation (1).

3. Procédé de revêtement selon l'une des revendications précédentes, **caractérisé en ce que** :
a) les unes après les autres, des bandes de peinture juxtaposées et se superposant latéralement sont appliquées sur la surface du composant (4), grâce au fait que le pulvérisateur (2) est déplacé le long des bandes de peinture au-dessus de la surface du composant (4) et distribue le jet de pulvérisation (1) sur la surface du composant (4) et
b) lors de l'application des bandes de peinture immédiatement adjacentes, le pulvérisateur (2) est déplacé dans des directions de peinture opposées le long des bandes de peinture.

4. Procédé de revêtement selon la revendication 3, **caractérisé en ce que**
a) le jet de pulvérisation (1) est incliné, avec son axe principal (5), dans les deux directions de peinture opposées transversales par rapport à la bande de peinture, par rapport à la normale (6) de la surface du composant (4), de façon à ce que les étirements et les refoulements de l'image de pulvérisation (8) se compensent au moins partiellement dans les directions de peinture opposées,ou
b) le jet de pulvérisation (1) est incliné, avec son axe principal (5), uniquement dans une direction de peinture transversale par rapport à la bande de peinture, par rapport à la normale (6) de la surface du composant (4) et, dans la direction de peinture opposée, avec son axe principal (5), est orienté essentiellement parallèlement à la normale (6) de la surface du composant (4), de façon à ce que les étirements ou les refoulements de l'image de pulvérisation (8) dans les directions de peinture opposées soient orientés dans la même direction.

5. Procédé de revêtement selon l'une des revendications précédentes, **caractérisé en ce que**
a) une première bande de peinture est appliquée sur la surface du composant (4), grâce au fait que le pulvérisateur (2) est déplacé le long de la première bande de peinture au-dessus de la surface du composant (4) et distribue le jet de pulvérisation (1) sur la surface du composant (4),
b) une deuxième bande de peinture est appliquée sur la surface du composant (4), grâce au fait que le pulvérisateur (2) est déplacé le long de la deux bande de peinture au-dessus de la surface du composant (4) et distribue le jet de pulvérisation (1) sur la surface du composant (4), la deuxième bande de peinture étant appliquée sur la première bande de peinture,
c) lors de l'application de la première bande de peinture et lors de l'application de la deuxième bande de peinture, le pulvérisateur (2) est déplacé dans directions opposées, de façon à compenser au moins partiellement les asymétries de l'image de pulvérisation (8) dans les deux bandes de peinture.

6. Procédé de revêtement selon la revendication 5, **caractérisé en ce que**
a) lors de l'application de chacune des deux bandes de peinture, le pulvérisateur (2) est déplacé le long d'une piste de déplacement (12, 14) de forme sinueuse, les pistes de déplacement (12, 14) de forme sinueuse des deux bandes de peinture étant symétriques en miroir et étant parcourues par le pulvérisateur (2) dans différentes directions de peinture, ou
b) lors de l'application de chacune des deux bandes de peinture, le pulvérisateur (2) est déplacé le long d'une piste de déplacement (12) de forme sinueuse, les pistes de déplacement (12) des deux bandes de peinture coïncidant globalement entre elles, mais sont parcourues dans des directions opposées.

7. Procédé de revêtement selon l'une des revendications précédentes, **caractérisé en ce que** l'asymétrie du jet de pulvérisation (1) est provoquée par au moins une des forces suivantes, qui agissent sur le jet de pulvérisation (1) :
a) une force de gravité orientée vers le bas ;
b) une force électrostatique exercée par une charge électrostatique du produit de revêtement et qui agit entre le produit de revêtement chargé de manière électrostatique et le composant mise à la terre,
c) une première force d'écoulement qui est exercée par un jet d'air de guidage, et/ou
d) une deuxième force d'écoulement, qui est provoquée grâce au fait que le pulvérisateur (2) est déplacé dans l'air environnant le long de la surface du composant (4) et/ou
e) une troisième force d'écoulement qui est générée par un écoulement d'air orienté vers le bas dans une cabine de peinture.

8. Procédé de revêtement selon la revendication 7, **caractérisé par** les étapes suivantes pour la compensation de l'asymétrie du jet de pulvérisation (1) :
a) détermination d'au moins une des forces qui provoquent l'asymétrie du jet de pulvérisation (1),
b) inclinaison du pulvérisateur (2) par rapport à la normale (6) de la surface du composant (4) en fonction de la ou des forces déterminées.

9. Dispositif de revêtement pour le revêtement de la surface d'un composant (4) avec un produit de revêtement, plus particulièrement pour la peinture d'un composant de carrosserie de véhicule avec une peinture, avec
a) un pulvérisateur (2) pour la distribution d'un jet de pulvérisation (1) d'un produit de revêtement sur la surface du composant (4), le jet de pulvérisation (1) présentant un axe principal (5) et présente, par rapport à l'axe principal (5), une asymétrie, de façon à ce que le jet de pulvérisation (1) produise, sur la surface du composant (4), une image de pulvérisation (8) avec une asymétrie correspondante,
b) un manipulateur (17) pour le déplacement du pulvérisateur (2),
c) une unité de commande (18) pour le contrôle du manipulateur (17),
d) l'unité de commande (18) contrôlant le manipulateur (17) de façon à ce que le pulvérisateur (2) soit déplacé dans une direction de peinture déterminée le long de la surface du composant (4), afin d'appliquer une bande de peinture allongée le long de la direction de peinture sur la surface du composant (4),
**caractérisé par**
e) un dispositif de compensation qui compense au moins partiellement l'asymétrie du jet de pulvérisation (1), de façon à ce que l'asymétrie de l'image de pulvérisation (8) qui en résulte sur la surface du composant (4) soit réduite,
f) l'unité de commande (18) contrôlant le manipulateur (17) de façon à ce que le jet de pulvérisation (1) soit incliné, avec son axe principal (5), transversalement, plus particulièrement perpendiculairement, par rapport à la direction de peinture, afin de compenser au moins partiellement l'asymétrie du jet de pulvérisation (1).

10. Dispositif de revêtement selon la revendication 9, **caractérisé en ce que**
a) le jet de pulvérisation (1) est déformé dans une direction de déformation transversale par rapport à l'axe principal (5) du jet de pulvérisation (1), de façon à ce que l'image de pulvérisation (8) qui en résulte sur la surface du composant (4) soit étirée dans la direction de déformation et refoulée dans la direction opposée à la direction de déformation,
b) l'unité de commande (18) contrôle le manipulateur (17) de façon à ce que le pulvérisateur (2) soit inclinée dans la direction opposée à la direction de déformation afin de compenser au moins partiellement l'asymétrie du jet de pulvérisation (1).

11. Dispositif de revêtement selon l'une des revendications 9 à 10, **caractérisé en ce que**
a) l'unité de commande (18) contrôle le manipulateur (17) de façon à ce que des bandes de peinture juxtaposées et se superposant latéralement soient appliquées sur la surface du composant (4), grâce au fait que le pulvérisateur (2) est déplacé le long des bandes de peinture au-dessus de la surface du composant (4) et distribue le jet de pulvérisation (1) sur la surface du composant (4)
b) l'unité de commande (18) contrôle le manipulateur (17) de façon à ce que, lors de l'application de bandes de peinture immédiatement adjacentes, le pulvérisateur (2) est déplacé dans des directions de peinture opposées le long des bandes de peinture.

12. Dispositif de revêtement selon la revendication 11, **caractérisé en ce que**
a) l'unité de commande (18) contrôle le manipulateur (17) de façon à ce que le pulvérisateur (2) soit incliné dans les deux directions de peinture opposées, transversales par rapport à la bande de peinture, par rapport à la normale (6) de la surface du composant (4), de façon à ce que les étirements et les refoulements dans les directions de peinture opposées se compensent au moins partiellement, ou
b) l'unité de commande (18) contrôle le manipulateur (17) de façon à ce que le pulvérisateur (2) soit incliné dans uniquement une direction de peinture, transversale par rapport à, la bande de peinture, par rapport à la normale (6) de la surface du composant (4) et soit orienté dans la direction de peinture opposée de manière globalement parallèle à la normale (6) de la surface du composant (4), de façon à ce que les étirements ou les refoulements de l'image de pulvérisation (8) dans les directions de peinture opposées soient orientés dans la même direction.

13. Dispositif de revêtement selon l'une des revendications 9 à 12, **caractérisé en ce que**
a) le manipulateur (17) est un robot de peinture multi-axe (17), plus particulièrement un robot de peinture librement programmable (17) avec une cinématique en série ou
b) le manipulateur est une machine de peinture, plus particulièrement une machine de toit ou une machine latérale.
